# EUROPEAN PATENT SPECIFICATION

(11) **EP 4 151 387 B1**
(45) Date of publication and mention of the grant of the patent: **25.10.2023**
(21) Application number: 22195155.1
(22) Date of filing: 12.09.2022
(51) Int. Cl.: B29C 45/76, B29C 45/42

(54) **APPARATUS FOR TAKING OUT MOLDED PRODUCT**
VORRICHTUNG ZUM HERAUSNEHMEN VON GEFORMTEN PRODUKTEN
APPAREIL DE SORTIE DE PRODUIT MOULE

(30) Priority: 17.09.2021 JP 2021152280
(43) Date of publication of application: 22.03.2023
(73) Proprietor: Yushin Precision Equipment Co. , Ltd., Kyoto (JP)
(72) Inventor: KIMURA, Yusei, Kyoto (JP); IKEDA, Koji, Kyoto (JP)
(74) Representative: Wilson Gunn

(56) References cited:
- JP-B2- 4 815 077
- US-A1- 2009 026 644

## Description

### BACKGROUND OF THE INVENTION

### Field of the Invention

The present invention relates to an apparatus for taking out a molded product that displays information for facilitating teaching on a display screen.

### Description of the Related Art

JPA 2019-018349 (Patent Literature 1) discloses a technique of storing a plurality of operation times in time series, measuring a plurality of cycle times, computing differences between the cycle times, and displaying the differences on a display screen in time series.

In addition, JPA 2006-305932 (Patent Literature 2) discloses a technique indicating how a monitoring target (a filling time, a measuring time of a molten resin of a barrel, a take-out time of a molded product in a mold, or the like) varies with respect to a reference value in a cycle time required for molding a molded product.

Further, Japanese Patent No. 4815077 (Patent Literature 3) discloses a technique of detecting an operation time of a moving object and comparing a detected value with an upper limit value and a lower limit value set based on an execution value obtained in advance by a trial operation.

Patent Literatures 1 to 3 disclose that a part of useful information is displayed when adjustment for shortening a take-out time and a cycle time is performed. However, these publications do not disclose any technique suitable for facilitating teaching when performing the adjustment for shortening the take-out time and the cycle time. As a procedure for shortening the take-out time, first, it is conceivable to set a speed to a high speed. However, since vibration may thus increase, adjustment is performed so as to reduce acceleration and deceleration at the same time. In addition, when a movement stroke is short, even if the speed is set to the high speed, an actual speed does not increase to a set value, and thus the take-out time may not be shortened. In such a case, adjustment is performed to increase the acceleration and deceleration as much as the vibration is acceptable. Therefore, it is difficult to simply increase the speed in order to shorten the take-out time, and it is necessary to adjust a plurality of parameters such as the speed and the acceleration and deceleration while checking a degree of the vibration. There may also be a case where it is desired to shorten the cycle time separately from the take-out time. For example, in consideration of a process in which a product is delivered to a machine of a following process on a release side, it is necessary to operate an apparatus for taking out a molded product such that a timing of delivery to the machine of the following process and a timing of releasing are matched. After the product is taken out, a traverse operation and a lowering operation are performed, and then the product is released. When an operation of a take-out robot and the machine of the following process are not matched, it is necessary to accelerate the traverse operation or the lowering operation. Here, when the traverse operation is accelerated, movable mass is larger, and thus power consumption is increased. On the other hand, when an up-down operation is accelerated, vibration of an arm at the time of delivery increases. Therefore, it is necessary to perform adjustment while balancing the operations. That is, the adjustment for shortening the take-out time or the cycle time is not a simple operation of setting a specific operation to be faster, but is a sophisticated operation performed to match a desired time while checking the vibration and a take-out error or delivery error caused by the vibration.

Therefore, under present circumstances, an operator observes states of vibration, mistakes in taking out, and the like, adjusts a speed and acceleration and deceleration for each operation, and performs teaching while viewing a take-out time or one cycle time. However, in related art, although the take-out time usually includes times of operations of lowering, pull-out forward movement, pull-out backward movement, and elevating, a time taken for each operation is not displayed. Therefore, the operator cannot know adjustment on which operation contributes most to time shortening in the process of the adjustment.

### SUMMARY OF THE INVENTION

An object of the present invention is to provide an apparatus for taking out a molded product capable of displaying information for facilitating adjustment on a display screen when performing adjustment for shortening a take-out time and a cycle time.

The apparatus for taking out a molded product according to the present invention includes: a storage section operable to store an operation sequence that is pre-determined by teaching; an operation control section operable to control an operation to take out a molded product from an opened mold of a molding machine with a take-out head by moving the take-out head according to the operation sequence, to carry the taken out molded product to a pre-determined position and to release the molded product there; an operation time counting section operable to count an actual operation time from a time when a plurality of set operations are started according the operation sequence till a time when the operations are completed; an operation time storing section operable to store, on a time series basis, the plurality of actual operation times counted by the operation time counting section; a display section including a display screen; and a display control section. The display control section is operable to cause the display section to display on the display screen data used at least when performing the teaching and changing set conditions for the operation sequence stored in the storage section. In the present invention, the display control section displays on the display screen at least identification indications for a plurality of set operations set in the operation sequence, set values for the plurality of set operations, and at least one of the actual operation times stored in the operation time storing section in correspondence to the plurality of set operations and an increase or decrease amount in the actual operation time.

As in the present invention, when the set values for the plurality of set operations, and the at least one of the actual operation times stored in the operation time storing section in correspondence to the plurality of set operations and the increase or decrease amount in the actual operation time are displayed on the display screen, the at least one of the actual operation times and the increase or decrease amount in the actual operation time are displayed on the display screen in correspondence to the set values for the set operations for teaching performed by an operator each time when a cycle after setting is completed. When performing adjustment to shorten a take-out time and a cycle time, the operator can view the actual operation time or the increase or decrease amount so as to determine whether the set values contribute to shortening the actual operation time. As a result, even if the operator is not skilled, the operator can immediately check whether the time can be shortened in each set operation depending on a setting method. In the case where the differences in the cycle times are displayed as shown in Patent Literature 1, it is not possible to understand the set value for which set operation contributes to the shortening of the cycle time unless the operator has a certain degree of skills. However, according to the present invention, since the at least one of the actual operation time and the increase or decrease amount in the actual operation time is displayed in correspondence to the set value for the set operation, setting for shortening the time can be easily optimized.

The apparatus for taking out a molded product may further include a data computing section operable to compute an increase or decrease amount in the actual operation time from time series data stored in the operation time storing section, and the display control section may display on the display screen an indication of a computed increase or decrease amount in the actual operation time. The increase or decrease amount is equivalent to a difference between the actual operation time in a preceding cycle and the actual operation time in a following cycle. If the increase or decrease amount is displayed, quality of setting can be quickly determined based on the increase or decrease amount even if no previous set value is stored.

The identification indication for the set operation may be at least one of an indication showing an operation and a symbol denoting an operation.

The display control section may allow set values for the plurality of set operations to be changed via the display screen or another display screen. In this way, the set values for the set operations can be changed while viewing a display result of the display screen, and workability is thus improved.

The set values for the plurality of set operations may be displayed in terms of percentage whereby a maximum value for a physical set value of a target set operation (or an operation to be set) is defined as 100%. In this way, quality of adjustment of the set value can be intuitively recognized.

The set values for the plurality of target set operations are effective in shortening a time of teaching. For example, the target set operation may include, in a selectable manner, a speed of the set operation, an acceleration speed, and a deceleration speed of the set operation, take-out position information, and a set time of a timer. In particular, selection or adjustment of the speed, the acceleration speed and the deceleration speed of the set operation, or the timer is effective in shortening the time.

The set values of the plurality of set operations may be set independently from each other. In this way, detailed setting can be performed, and thus convenience is improved.

The display control section may display the set operation currently in motion so as to be distinguishable from other set operations. In this way, it is also possible to adjust the set value for a next cycle during an operation of one cycle.

The display control section may display on the display screen an increase or decrease amount of an actual cycle time of a current cycle and an actual cycle time of a preceding cycle each time one cycle is completed. In this way, it is possible to recognize how the set value of each set operation affects one cycle time, and thus techniques for performing effective set value selection or adjustment can be gradually acquired even if the operator is not skilled.

### BRIEF DESCRIPTION OF THE DRAWINGS

FIG. 1 is a block diagram showing in blocks main sections of a configuration of an apparatus for taking out a molded product according to the present embodiment that takes out a molded product from a molding machine.
FIG. 2 is a diagram showing operation phases set by an operation sequence.
FIG. 3 is a diagram showing an example display of a display screen.
FIG. 4 is a diagram showing an example of a set value change input screen.

### DESCRIPTION OF THE PREFERRED EMBODIMENTS

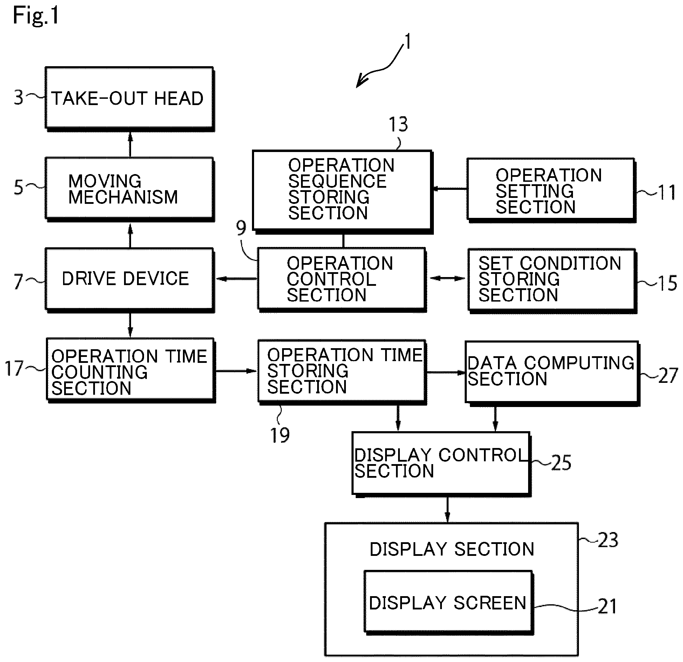

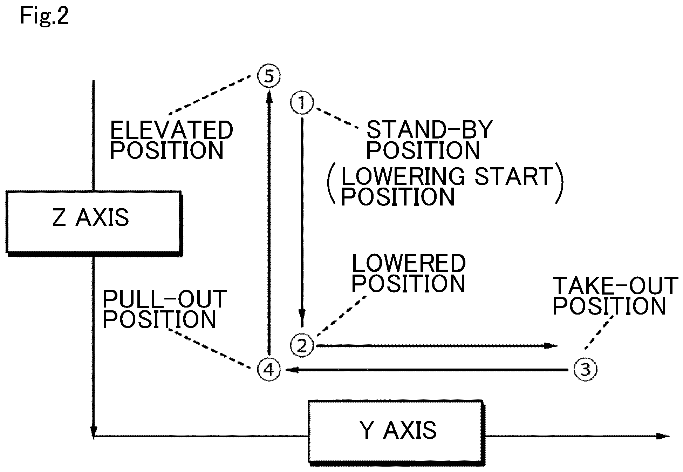

Hereinafter, an embodiment of an apparatus for taking out a molded product according to the present invention will be described in detail with reference to the drawings. FIG. 1 is a block diagram showing in blocks main sections of a configuration of an apparatus for taking out a molded product 1 according to the present embodiment that takes out a molded product from a molding machine. The apparatus for taking out a molded product 1 includes: a take-out head 3 including a suction nozzle or the like; a moving mechanism 5 configured to move the take-out head 3; a drive device 7 configured to drive the moving mechanism 5; and an operation control section 9 configured to issue an operation command to the drive device 7. In a case where the moving mechanism 5 is a well-known three-axis moving mechanism, that is, an XYZ type moving mechanism, the moving mechanism 5 moves the take-out head 3, which moves along a Z axis and a Y axis and includes the suction nozzle, in the order of a stand-by position (lowering start position) → a lowered position → a take-out position → a pull-out position → an elevated position when performing a take-out operation of taking out the molded product as shown in FIG. 2. At the take-out position, the moving mechanism 5 suctions and takes out the molded product, which is extruded from a mold of the molding machine by a protruding operation of an ejector pin, by the suction nozzle. Thereafter, the moving mechanism 5 moves the take-out head 3 equipped with the suction nozzle from the elevated position to a release position (not shown). At the release position, the suction by the suction nozzle is released, and the molded product is released at the release position.

The operation control section 9 includes a computing device such as a CPU, and executes operation control of the suction nozzle and control of the drive device 7 that drives the moving mechanism 5. In the present embodiment, the operation control section 9 controls an operation in which the moving mechanism 5 is operated to move the take-out head 3 according to an operation sequence set in advance by an operation setting section 11 and stored in an operation sequence storing section 13 at the time of teaching such that the molded product is taken out from an opened mold of the molding machine by the take-out head 3, and the taken out molded product is carried to a predetermined position and released.

In addition, in order to assist the teaching, the apparatus for taking out a molded product 1 in the present embodiment further includes: a set condition storing section 15 configured to store a part of operation conditions, as will be described later, set by the operation setting section 11; an operation time counting section 17 configured to count actual operation times from times when a plurality of set operations are started according the operation sequence till times when the operations are completed; an operation time storing section 19 configured to store the plurality of actual operation times counted by the operation time counting section 17 in time series; a display section 23 including a display screen 21; a display control section 25; and a data computing section 27. In the present embodiment, the display section 23 has a touch switch function that allows a switch to be turned on and off by touching a button (switch section) on the display screen 21. In the present embodiment, the display section 23 also serves as a display section of a controller of the apparatus for taking out a molded product.

In the present embodiment, the operation in which the take-out head 3 moves between the plurality of positions shown in FIG. 2 is referred to as "a plurality of set operations", and a time from when the movement between the positions is started to when the movement is completed is referred to as an "actual operation time".

The operation time counting section 17 counts an actual operation time t of the take-out head 3 moved by the moving mechanism 5 based on, for example, an output of an encoder mounted on a servo motor provided in the drive device 7 and count information of a mounted CPU. Specifically, movement of the servo motor that operates from a starting position to a target position is detected by the output of the encoder, and a clock of the CPU is counted until the operation is stopped so as to count the operation time t. The display control section 25 causes the display screen 21 to display data used at least when performing the teaching and when the operation sequence stored in the operation sequence storing section 13 and set conditions stored in the set condition storing section 15 are changed. In the present embodiment, the display control section 25 displays, on the display screen 21, at least identification indications for a plurality of set operations set in the operation sequence, set values for the plurality of set operations, and the actual operation time t stored in the operation time storing section 19 in correspondence to the plurality of set operations.

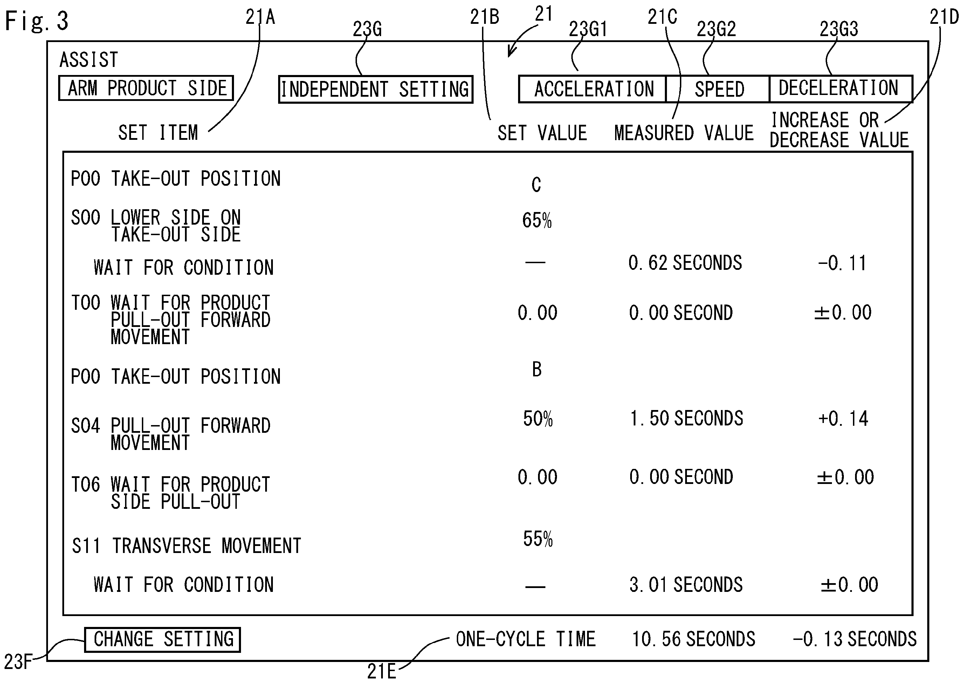

FIG. 3 shows an example of display of the display screen 21 when assisting the teaching. In this example, in a set item column 21A, symbols "P00", "S00", and the like that are the identification indications of the set operations, and items "take-out position", "wait for condition on lower side on take-out side", "wait for product pull-out forward movement", and the like are described.

In addition, the set values for the set operations set by the operation setting section 11 and stored in the set condition storing section 15 are described in a set value column 21B. Here, the set values are each displayed in terms of percentage whereby a maximum value for a physical set value of a set operation to be set is defined as 100%. In the present embodiment, the set values, which serve as the set conditions of the plurality of set operations, are set by the operation setting section 11, and are stored in the set condition storing section 15, include physical set values such as a speed, an acceleration speed and a deceleration speed of the target set operation, take-out position information, and a set time of a timer. For example, when the set values are the speed, the acceleration speed, and the deceleration speed, the set values are displayed with maximum values of the speed, the acceleration speed, and the deceleration speed defined as 100%. In the present embodiment, after an independent setting button 23G in FIG. 3 is pressed, a physical set value of a set operation is selected when any one of an "acceleration" button 23G1, a "speed" button 23G2, and a "deceleration" button 23G3 is pressed. When the independent setting button is not pressed, a physical set value determined in advance for each set operation is automatically selected. Since the set value is displayed in terms of percentage, magnitude of the set value can be intuitively determined.

In FIG. 3, in a set operation of "S04 pull-out forward movement", when "speed" is independently set, a set value of "50%" means that a speed of "50%" is set while a settable maximum value of the speed is defined as 100%. The set values for the plurality of set operations are effective in shortening a time of the teaching. In particular, selection or adjustment of the speed, the acceleration speed and the deceleration speed of the set operation, or the timer is effective in shortening a cycle time.

Further, the operation time t actually measured for each set operation is displayed in a measured value column 21C of FIG. 3. In the case of the set operation of "S04 pull-out forward movement", a measured value (actual operation time) of "1.50 seconds" is an actual time required for the take-out head to move from the "lowered position" to the "take-out position" in FIG. 2. By recognizing the actual operation time, whether setting is favorable or not can be recognized at real time intervals.

In addition, in an increase or decrease value column 21D in FIG. 3, a result obtained by computing an increase or decrease amount of the actual operation time t by the data computing section 27 from time series data stored in time series in the operation time storing section 19 is shown as an increase or decrease value (increase or decrease amount). The increase or decrease value is an amount equivalent to a difference (tf - tl) between an actual operation time tf of a preceding cycle and an actual operation time tl of a following cycle. If the increase or decrease value (amount) is displayed, quality of the setting can be quickly determined based on the increase or decrease value even if no previous set value is stored. Although both the actual operation time (measured value) and the increase or decrease value (increase or decrease amount) are displayed on the display screen in the present embodiment, in the present invention, at least one of the actual operation time (measured value) and the increase or decrease value (increase or decrease amount) may be displayed. It is needless to say that convenience for a user is improved if both of the actual operation time and the increase or decrease value are displayed.

In a one-cycle time column 21E in FIG. 3, each time when one cycle is completed, an actual cycle time of a current cycle and an increase or decrease amount between the actual cycle time of the current cycle and an actual cycle time of a preceding cycle are displayed. In the example in FIG. 3, "10.56 seconds" is the current actual cycle time, and "-0.13 seconds" is the increase or decrease amount of the current cycle time with respect to the preceding cycle time. The increase or decrease amount is also computed by the data computing section 27. In this example, it can be recognized that the cycle time is shortened by 0.13 seconds.

In the present embodiment, the display control section 25 displays a set operation currently in motion so as to be distinguishable from other set operations. In the example in FIG. 3, in order to indicate that a set item of "TOO wait for product pull-out forward movement" is an item currently in motion, a background color of such a displayed portion is changed. In this way, since the item currently in motion in operations of one cycle is recognized, as for an item executed before the item currently in motion, it is also possible to adjust a set value for a next cycle during operation.

Referring to the display shown in FIG. 3, it is possible to recognize how the set value of each set operation affects one cycle time, and thus techniques for performing effective set value selection or adjustment can be gradually acquired even if an operator is not skilled.

According to the present embodiment, each time when a cycle after setting is completed, the set value of the set operation for teaching performed by the operator, the actual operation time t corresponding to the set value, the increase or decrease value of the operation time of the set operation, the cycle time, and the increase or decrease amount of the cycle time are displayed on the display screen. When performing adjustment to shorten a take-out time and a cycle time, the operator can view the actual operation time t so as to determine whether the set value contribute to shortening the actual operation time. As a result, even if the operator is not skilled, the operator can immediately check whether the time can be shortened in each set operation depending on a setting method. In a case where only a difference in cycle times is displayed as in PTL 1, it is not possible to understand the set value for which set operation contributes to the shortening of the cycle time unless the operator has a certain degree of skills. However, according to the present embodiment, since the actual operation time t is displayed in correspondence to the set value for the set operation, setting for shortening the time can be easily optimized.

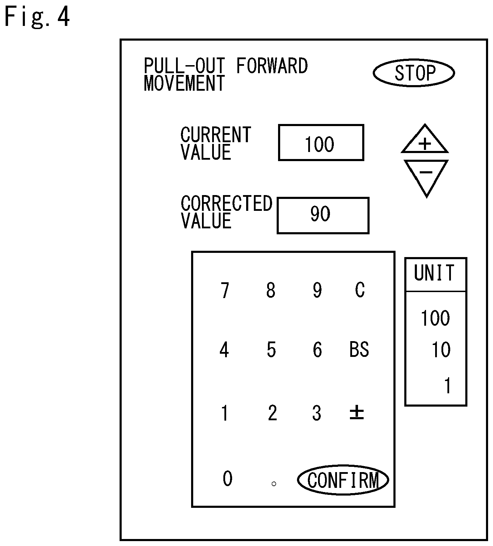

In the present embodiment, the display control section 25 allows the set values of the plurality of set operations to be changed via the display screen or another display screen. FIG. 4 shows an example of an input screen for changing the set values. The display in FIG. 4 is an input screen for changing a set value of the set item "pull-out forward movement" in FIG. 3. This screen may be displayed separately from the display screen in FIG. 3, or may be displayed and overlaid on the screen in FIG. 3 such that a part of the display of the screen in FIG. 3 is left. In the present embodiment, when the set value change input screen in FIG. 4 is displayed, the set value change input screen can be displayed on the display screen by touching a button 23F of "change setting" in FIG. 3 and then touching the set item "pull-out forward movement". In this way, the set values for the set operations can be changed while viewing a display result of the display screen, and workability is thus improved. In the input screen in FIG. 4, a set value and a corrected value are displayed in terms of percentage. A unit of an increase or decrease when "+" or "-" switch is pressed once is determined by selecting "unit". 100 of the "unit" display is pressed when percentage display is selected as the display.

Although the increase or decrease value is displayed together with the measured value in the above embodiment, only the measured value or the increase or decrease value may be displayed on the display screen 21.

In addition, in the above embodiment, the set value is displayed in terms of percentage with respect to the maximum value of the condition in the set item, and it is needless to say that the actual set value may also be displayed.

According to the present invention, since the actual operation time is displayed on the display screen in correspondence to the set value for the set operation for the teaching performed by the operator each time when a cycle after multiple settings is completed, the operator can view the actual operation time so as to determine whether the set value contributes to shortening the actual operation time when performing the adjustment to shorten the take-out time and the cycle time. As a result, even if the operator is not skilled, the operator can immediately check whether the time can be shortened in each set operation depending on the setting method.

## Claims

1. An apparatus for taking out a molded product comprising:
a storage section operable to store an operation sequence that is pre-determined by teaching;
an operation control section (9) operable to control an operation to take out a molded product from an opened mold of a molding machine with a take-out head (3) by moving the take-out head according to the operation sequence, to carry the taken out molded product to a pre-determined position and to release the molded product there;
an operation time counting section (17) operable to count an actual operation time from a time when a plurality of set operations are started according the operation sequence till a time when the operations are completed;
an operation time storing section (19) operable to store, on a time series basis, the plurality of actual operation times counted by the operation time counting section (17);
a display section (23) including a display screen (21): and
a display control section operable to cause the display section (25) to display on the display screen data used at least when performing the teaching and changing set conditions for the operation sequence stored in the storage section, **characterized in that**:
the display control section (25) displays on the display screen (21) at least identification indications for a plurality of set operations set in the operation sequence, set values for the plurality of set operations, and at least one of the actual operations times stored in the operation time storing section (19) in correspondence to the plurality of set operations and an increase or decrease amount in the actual operation time.

2. The apparatus for taking out a molded product according to claim 1, further comprising a data computing section (27) operable to compute an increase or decrease amount in the actual operation time from time series data stored in the operation time storing section (19), wherein the display control section (25) displays on the display screen (21) an indication of a computed increase or decrease amount in the actual operation time together with the actual operation time.

3. The apparatus for taking out a molded product according to claim 2, wherein the increase or decrease amount is equivalent to a difference between the actual operation time in a preceding cycle and the actual operation time in a following cycle.

4. The apparatus for taking out a molded product according to claim 1, wherein the identification indication for the set operation is at least one of an indication showing an operation and a symbol denoting an operation.

5. The apparatus for taking out a molded product according to anu one of claims 1 to 4, wherein the display control section (25) is configured to allow set values for the plurality of set operations to be changed via the display screen (21) or another display screen.

6. The apparatus for taking out a molded product according to claim 1, wherein the set values for the plurality set operations are displayed in terms of percentage whereby a maximum value for a physical set value of a target set operation is defined as 100 %.

7. The apparatus for taking out a molded product according to claim 6, wherein the target set operation includes at least one of a speed of the set operation, an acceleration speed and a deceleration speed of the set operation, take-out position information, and a timer limit of a timer.

8. The apparatus for taking out a molded product according to claim 7, wherein the set values of the plurality of set operations can be set independently from each other.

9. The apparatus for taking out a molded product according to any one of claims 1 to 8, wherein the display control section (25) displays the set operation currently in motion so as to be distinguishable from other set operations.

10. The apparatus for taking out a molded product according to any one of claims 1 to 9, wherein the display control section (25) displays on the display screen (21) an increase or decrease amount of an actual cycle time of a current cycle and an actual cycle time of a preceding cycle each time one cycle is completed.

## Patentansprüche

1. Vorrichtung zum Herausnehmen eines geformten Produkts, umfassend:
einen Speicherabschnitt, der betreibbar ist, um eine Betriebssequenz zu speichern, die durch Anlernen vorbestimmt ist;
einen Betriebssteuerungsabschnitt (9), der betreibbar ist, um einen Betrieb zu steuern, um ein geformtes Produkt aus einer geöffneten Form einer Formmaschine mit einem Entnahmekopf (3) herauszunehmen, indem der Entnahmekopf gemäß der Betriebssequenz bewegt wird, um das herausgenommene geformte Produkt zu einer vorbestimmten Position zu tragen und das geformte Produkt dort freizugeben;
einen Betriebszeit-Zählabschnitt (17), der betreibbar ist, um eine tatsächliche Betriebszeit von einer Zeit, wenn eine Mehrzahl von festgelegten Betriebsvorgängen gemäß der Betriebssequenz gestartet wird, bis zu einer Zeit, wenn die Betriebsvorgänge abgeschlossen sind, zu zählen;
einen Betriebszeit-Speicherabschnitt (19), der betreibbar ist, um die Mehrzahl von tatsächlichen Betriebszeiten, die durch den Betriebszeit-Zählabschnitt (17) gezählt wurden, auf einer Zeitreihenbasis zu speichern;
einen Anzeigeabschnitt (23), der einen Anzeigebildschirm (21) enthält; und
einen Anzeigesteuerungsabschnitt, der betreibbar ist, um zu verursachen, dass der Anzeigeabschnitt (25) auf dem Anzeigebildschirm Daten anzeigt, die zumindest verwendet werden bei der Durchführung des Anlernens und der Änderung von festgelegten Bedingungen für die in dem Speicherabschnitt gespeicherte Betriebssequenz, **dadurch gekennzeichnet, dass**:
der Anzeigesteuerungsabschnitt (25) auf dem Anzeigeschirm (21) zumindest Identifikationsangaben für eine Mehrzahl von festgelegten Betrieben, die in der Betriebssequenz festgelegt wurden, festgelegte Werte für die Mehrzahl von festgelegten Betrieben, und zumindest eine von der tatsächlichen Betriebszeiten anzeigt, die in dem Betriebszeit-Speicherabschnitt (19) gespeichert sind, entsprechend der Mehrzahl von festgelegten Betrieben und einem Erhöhungs- oder Verringerungsbetrag in der tatsächlichen Betriebszeit.

2. Vorrichtung zum Herausnehmen eines geformten Produkts nach Anspruch 1, ferner umfassend einen Datenberechnungsabschnitt (27), der betreibbar ist, um einen Erhöhungs- oder Verringerungsbetrag in der tatsächlichen Betriebszeit von Zeitreihendaten zu berechnen, die in dem Betriebszeit-Speicherabschnitt (19) gespeichert sind, wobei der Anzeigesteuerungsabschnitt (25) auf dem Anzeigebildschirm (21) eine Angabe eines berechneten Erhöhungs- oder Verringerungsbetrags in der tatsächlichen Betriebszeit zusammen mit der tatsächlichen Betriebszeit anzeigt.

3. Vorrichtung zum Herausnehmen eines geformten Produkts nach Anspruch 2, wobei der Erhöhungs- oder Verringerungsbetrag äquivalent ist zu einer Differenz zwischen der tatsächlichen Betriebszeit in einem vorhergehenden Zyklus und der tatsächlichen Betriebszeit in einem nachfolgenden Zyklus.

4. Vorrichtung zum Herausnehmen eines geformten Produkts nach Anspruch 1, wobei die Identifikationsangabe für den festgelegten Betrieb zumindest eine von einer Angabe ist, die einen Betrieb zeigt und ein Symbol, das einen Betrieb bezeichnet.

5. Vorrichtung zum Herausnehmen eines geformten Produkts nach einem der Ansprüche 1 bis 4, wobei der Anzeigesteuerungsabschnitt (25) dazu konfiguriert ist, zu erlauben, dass festgelegte Werte für die Mehrzahl von festgelegten Betrieben über den Anzeigebildschirm (21) oder einen anderen Anzeigebildschirm verändert werden.

6. Vorrichtung zum Herausnehmen eines geformten Produkts nach Anspruch 1, wobei die festgelegten Werte für die Mehrzahl von festgelegten Betrieben in Bezug auf einen prozentualen Anteil angezeigt werden, wobei ein maximaler Wert für einen physischen festgelegten Wert eines angestrebten festgelegten Betriebs als 100% definiert ist.

7. Vorrichtung zum Herausnehmen eines geformten Produkts nach Anspruch 6, wobei der angestrebte festgelegte Betrieb zumindest eines von einer Geschwindigkeit des festgelegten Betriebs, einer Beschleunigungsgeschwindigkeit und einer Entschleunigungsgeschwindigkeit des festgelegten Betriebs, Herausnahme-Positionsinformationen, und einem Zeitgeberlimit eines Zeitgebers enthält.

8. Vorrichtung zum Herausnehmen eines geformten Produkts nach Anspruch 7, wobei die festgelegten Werte von der Mehrzahl von festgelegten Betrieben unabhängig voneinander festgelegt werden können.

9. Vorrichtung zum Herausnehmen eines geformten Produkts nach einem der Ansprüche 1 bis 8, wobei der Anzeigesteuerungsabschnitt (25) den sich gegenwärtig in Bewegung befindlichen festgelegten Betrieb derart anzeigt, dass er von anderen festgelegten Betrieben unterscheidbar ist.

10. Vorrichtung zum Herausnehmen eines geformten Produkts nach einem der Ansprüche 1 bis 9, wobei der Anzeigesteuerungsabschnitt (25) auf dem Anzeigebildschirm (21) jedes Mal, wenn ein Zyklus abgeschlossen ist, einen Erhöhungs- oder Verringerungsbetrag einer tatsächlichen Zykluszeit eines gegenwärtigen Zyklus und einer tatsächlichen Zykluszeit eines vorhergehenden Zyklus anzeigt.

## Revendications

1. Installation pour sortir un produit moulé comprenant :
une partie de mémoire pouvant fonctionner pour mettre en mémoire une séquence de fonctionnement, qui est déterminée à l'avance par un apprentissage,
une partie (9) de commande de fonctionnement pouvant fonctionner pour commander un fonctionnement pour sortir d'un produit moulé d'un moule ouvert d'une machine de moulage par une tête (3) de sortie en déplaçant la tête de sortie suivant la séquence de fonctionnement pour porter le produit moulé sorti en une position déterminée à l'avance et pour y libérer le produit moulé ;
une partie (17) de comptage du temps de fonctionnement pouvant fonctionner pour compter un temps réel de fonctionnement, à partir d'un temps où une pluralité d'opérations fixées sont commencées suivant la séquence de fonctionnement, jusqu'à un temps où les opérations sont achevées ;
une partie (19) de mise en mémoire d'un temps de fonctionnement pouvant fonctionner pour mettre en mémoire, sur une base de série temporelle, la pluralité de temps réels de fonctionnement comptés par la partie (17) de comptage de temps de fonctionnement ;
un partie (23) d'affichage comprenant un écran (21) d'affichage ; et
une partie de commande d'affichage pouvant fonctionner pour faire que la partie (25) d'affichage affiche, sur l'écran d'affichage, des données utilisées au moins lorsque sont effectués l'apprentissage et le changement des conditions fixées pour la séquence de fonctionnement mise en mémoire dans la partie de mémoire, **caractérisée en ce que** :
la partie (25) de contrôle d'affichage affiche, sur l'écran (21) d'affichage, au moins des indications d'identification d'une pluralités de fonctionnements fixés dans la séquence de fonctionnement, des valeurs fixées pour la pluralité de fonctionnements fixés et au moins l'un des temps réels de fonctionnement mis en mémoire dans la partie (19) de mise en mémoire de temps de fonctionnement en correspondance avec la pluralité de fonctionnements fixés et une augmentation ou une diminution du temps réel de fonctionnement.

2. Installation pour sortir un produit moulé suivant la revendication 1, comprenant en outre une partie (27) de calcul de données pouvant fonctionner pour calculer une augmentation ou une diminution du temps réel de fonctionnement à partir de données de séries temporelles mises en mémoire dans la partie (19) de mise en mémoire de temps de fonctionnement, dans laquelle la partie (25) de commande d'affichage affiche, sur l'écran (21) d'affichage, un indication de l'augmentation ou de la diminution calculée du temps réel de fonctionnement ensemble avec le temps réel de fonctionnement.

3. Installation pour sortir un produit moulé suivant la revendication 2, dans laquelle l'augmentation ou la diminution est équivalente à une différence entre le temps réel de fonctionnement dans un cycle précédent et le temps réel de fonctionnement dans un cycle suivant.

4. Installation pour sortir un produit moulé suivant la revendication 1, dans laquelle l'indication d'identification du fonctionnement fixé est au moins l'une d'une indication représentant un fonctionnement et d'un symbole dénotant un fonctionnement.

5. Installation pour sortir un produit moulé suivant l'une quelconque des revendications 1 à 4, dans laquelle la partie (25) de commande d'affichage est configurée pour permettre de changer des valeurs fixées de la pluralité de fonctionnements fixés par l'intermédiaire de l'écran (21) d'affichage ou d'un autre écran d'affichage.

6. Installation pour sortir un produit moulé suivant la revendication 1, dans laquelle les valeurs fixées de la pluralité de fonctionnements fixés sont affichées en termes de pourcentage, dans laquelle une valeur maximum d'une valeur physique fixée d'un fonctionnement cible fixé est définie comme 100 %.

7. Installation pour sortir un produit moulé suivant la revendication 6, dans laquelle le fonctionnement cible fixé comprend au moins l'un d'une vitesse du fonctionnement fixé, d'une vitesse d'accélération et d'une vitesse de décélération du fonctionnement fixé, une information de position de sortie et une limite d'une minuterie.

8. Installation pour sortir un produit moulé suivant la revendication 7, dans laquelle les valeurs fixées de la pluralité de fonctionnements fixés peuvent être fixées indépendamment les unes des autres.

9. Installation pour sortir un produit moulé suivant l'une quelconque des revendications 1 à 8, dans laquelle la partie (25) de commande d'affichage affiche le fonctionnement fixé couramment en cours, de manière à pouvoir être distingué d'autres fonctionnements fixés.

10. Installation pour sortir un produit moulé suivant l'une quelconque des revendications 1 à 9, dans laquelle la partie (25) de commande d'affichage affiche, sur l'écran (21) d'affichage, une augmentation ou une diminution d'un temps réel de cycle d'un cycle en cours et d'un temps réel de cycle d'un cycle précédent, chaque fois qu'un cycle est achevé.
